# EUROPEAN PATENT SPECIFICATION

(11) **EP 3 211 232 B1**
(45) Date of publication and mention of the grant of the patent: **27.02.2019**
(21) Application number: 16199680.6
(22) Date of filing: 18.11.2016
(51) Int. Cl.: F04B 17/02, F04B 51/00, F03C 1/04, F03D 15/00

(54) **SYSTEM AND METHOD FOR DIAGNOSING HYDRAULIC MACHINE, HYDRAULIC MACHINE, HYDRAULIC TRANSMISSION, AND RENEWABLE-ENERGY TYPE POWER GENERATING APPARATUS**
SYSTEM UND VERFAHREN ZUR DIAGNOSE EINER HYDRAULISCHEN MASCHINE, HYDRAULISCHE MASCHINE, HYDRAULISCHE ÜBERTRAGUNG UND LEISTUNGSERZEUGUNGSVORRICHTUNG MIT ERNEUERBARER ENERGIE
SYSTÈME ET PROCÉDÉ DE DIAGNOSTIC DE MACHINE HYDRAULIQUE, MACHINE HYDRAULIQUE, TRANSMISSION HYDRAULIQUE ET GÉNÉRATEUR DE TYPE À ÉNERGIE RENOUVELABLE

(30) Priority: 26.02.2016 JP 2016035546
(43) Date of publication of application: 30.08.2017
(73) Proprietor: Mitsubishi Heavy Industries, Ltd., Tokyo 108-8215 (JP)
(72) Inventor: Hayashi, Toshikazu, Tokyo, 108-8215 (JP); Yuge, Atsushi, Tokyo, 108-8215 (JP); Kagimoto, Yoshimi, Tokyo, 108-8215 (JP); Noguchi, Toshihide, Tokyo, 108-8215 (JP)
(74) Representative: Henkel, Breuer & Partner

(56) References cited:
- EP-A1- 2 889 480
- EP-A1- 2 889 710
- US-A1- 2004 167 738

## Description

### TECHNICAL FIELD

The present disclosure relates to a system and a method for diagnosing a hydraulic machine, a hydraulic machine, a hydraulic transmission, and a renewable-energy type power generating apparatus.

### BACKGROUND ART

A hydraulic machine such as a hydraulic pump and a hydraulic motor has been known.

For instance, US 2010/0040470A discloses a hydraulic machine which performs conversion between fluid energy of working fluid and rotational energy of a rotary shaft, by utilizing a cyclic volume change of a working chamber formed by a cylinder and a piston.

WO 2013/118182A discloses a hydraulic machine provided with a poppet valve as a high-pressure valve for switching a communication state between a working chamber and a high-pressure line outside the working chamber.

EP 2889480 A1 discloses a diagnostic system and diagnostic method for a hydraulic machine. The diagnostic system/method utilizes a pressure sensor for detecting the pressure in the working chamber. The pressure measurement values of the pressure in the working chamber detected by the pressure sensor are integrated over time to calculate an integral value, which in return is used to determine a dimensionless integral pressure value which indicates a ratio of the integral value calculated by the integration of the detected pressure values to a product of a period of the reciprocating motion of the piston and a pressure of a high-pressure line connected to the hydraulic machine for communication with the working chamber via the high-pressure valve. An abnormal situation indicative of a damage or wear of the high-pressure valve or the low-pressure valve is determined based on the result of a comparison between an actual delay time of the pressure change of the working chamber caused by opening or closing of the high-pressure valve or low-pressure valve and an ideal delay time.

US 2004/0167738 A1 discloses a performance analysis system for a power pump comprising a plurality of pumping chambers for receiving fluid from an inlet manifold by way of a conventional poppet valve inlet or suction valve, and a discharge valve connected to a discharge piping manifold. The valves are of conventional design and are typically spring biased to the closed positions. Pressure sensors are provided for sensing the pressure in the respective pump chambers and their pressure signals are transmitted to a processor. The delay in opening and closing of the discharge valve and of the suction valve and the reduction in volumetric efficiency of the pumping chamber caused by the delay are monitored based on the change in the pressure of the pumping chambers. A malfunction of the discharge valve is determined based on the timing of the drop in the pressure of the pumping chamber during the cycle of the pumping chamber.

### SUMMARY

In case of damage to a valve in a hydraulic machine, the damage may cause deterioration of performance of the hydraulic machine or reduction in lifetime of the hydraulic machine. To prevent deterioration and lifetime reduction of a hydraulic machine, it is important to detect a damage of a valve appropriately.

In view of the above, an object of at least one embodiment of the present invention is to provide a diagnosis system for a hydraulic machine, whereby it is possible to detect a damage of a high-pressure valve appropriately.
(1) A diagnosis system according to the present invention comprises the features of claim 1 and is for a hydraulic machine which comprises a rotor shaft, a cylinder, a piston forming a working chamber together with the cylinder, and a high-pressure valve and a low-pressure valve provided for the working chamber, and which is configured to perform conversion between rotational motion of the rotor shaft and reciprocal motion of the piston, and the diagnosis system comprises: a pressure sensor for detecting a pressure of the working chamber; and a damage detecting part for detecting the damage of the high-pressure valve on the basis of a result of detection obtained by the pressure sensor. The high-pressure valve is a poppet valve which includes a seat, and a valve body being a poppet configured to be in contact with the seat from a side of a high-pressure line of the hydraulic machine. The damage detecting part is configured to detect the damage of the valve body of the high-pressure valve on the basis of a maximum value of a pressure of the working chamber in each cycle of the reciprocal motion of the piston.

The above described high-pressure valve (poppet valve) opens if a force applied to the poppet from the side of the working chamber is greater than a force applied to the poppet from the side of the high-pressure line (a fluid force or a force that biases the valve body). As a result of intensive researches by the present inventors, it was found that, when the high-pressure valve opens and closes, the poppet repeatedly hits and separates from the seat while being exposed to the high pressure of the high-pressure line, and thereby a damage of the poppet may occur, including deformation and abrasion for instance. Furthermore, according to the findings of the present inventors, if the area of a contact surface of the poppet contacting the seat increases due to such a damage, a pressure-receiving area of the poppet at the side of the high-pressure line increases relative to a pressure-receiving area of the poppet at the side of the working chamber, and thereby an event may occur, in which the high-pressure valve does not open unless the working-chamber pressure increases further.

In this regard, with the above configuration (1), the maximum value of the pressure of the working chamber in each cycle of the reciprocal motion of the piston is obtained. Herein, the maximum value of the working-chamber pressure corresponds to the working-chamber pressure required for the high-pressure valve to open in each cycle. Thus, with the above configuration (1), it is possible to detect a damage (deformation, abrasion, or the like) of the valve body of the high-pressure valve on the basis of the maximum value of the pressure of the working chamber in each cycle of the reciprocal motion of the piston.
(2) According to the invention, the damage detecting part is configured to determine that a damage of the valve body of the high-pressure valve exists if Pmax_ave+a×σ is at least a threshold, where Pmax_ave is an average of the maximum value of the pressure of the working chamber in a statistical period, σ is a standard deviation of the maximum value of the pressure of the working chamber in the statistical period, and a is a value which satisfies an expression of a ≥ 0.

According to the findings of the present inventors, in a hydraulic machine, the more serious a damage of the valve body of the high-pressure valve is, the greater the maximum value of the working-chamber pressure tends to be in each cycle of the reciprocal motion of the piston.

Thus, as in the above configuration (2), it is possible to determine presence of a damage of the valve body of the high-pressure valve by comparing a value of Pmax_ave+a×σ to a threshold.
(3) In some embodiments, the damage detecting part is configured to evaluate a degree of damage of the valve body of the high-pressure valve on the basis of an increasing rate of Pmax_ave+a×σ in a statistical period, where Pmax_ave is an average of the maximum value of the pressure of the working chamber in the statistical period, σ is a standard deviation of the maximum value of the pressure of the working chamber in the statistical period, and a is a value which satisfies an expression of a ≥ 0.

According to the findings of the present inventors, in a hydraulic machine, the more serious a damage of the valve body of the high-pressure valve is, the greater the maximum value of the working-chamber pressure tends to be in each cycle of the reciprocal motion of the piston. Thus, as in the above configuration (3), it is possible to determine a degree of damage (development degree of a damaged condition) of the valve body of the high-pressure valve on the basis of an increasing rate of Pmax_ave+a×σ.
(4) In some embodiments, the damage detecting part is configured to detect the damage of the valve body of the high-pressure valve on the basis of the number of times that the maximum value of the pressure of the working chamber exceeds a threshold.

According to the findings of the present inventors, in a hydraulic machine, the more serious a damage of the valve body of the high-pressure valve is, the greater the maximum value of the working-chamber pressure tends to be in each cycle of the reciprocal motion of the piston. Thus, as in the above configuration (4), presence of a damage of the valve body of the high-pressure valve can be detected on the basis of the number of times that the maximum value of the working-chamber pressure exceeds a threshold.
(5) In some embodiments, the diagnosis system further comprises a threshold setting part configured to determine a threshold on the basis of a statistical value of the maximum value of the pressure of the working chamber in an initial state of the high-pressure valve. The damage detecting part is configured to detect the damage of the valve body of the high-pressure valve on the basis of a result of comparison between the maximum value of the pressure of the working chamber or the statistical value of the maximum value and the threshold set by the threshold setting part.

A waveform that can be obtained by measuring a pressure of a working chamber is different between individual high-pressure valves used in a hydraulic machine.

According to the above configuration (5), a threshold is determined on the basis of a statistical value of the maximum value of the working-chamber pressure in an initial state of the high-pressure valve, and thereby it is possible to set an appropriate threshold individually for each high-pressure valve.
(6) In some embodiments of the hydraulic machine, the high-pressure valve comprises a seat, and a poppet including a poppet body and a ridge protruding toward the seat from the poppet body, and the high-pressure valve is configured to cause the high-pressure line and the working chamber to be in a non-communicating state by the ridge of the poppet permitted to be in contact with the seat, in a closed state of the high-pressure valve.

In the case where the high-pressure valve has the configuration described in the above (6), if abrasion on a distal end of the ridge of the poppet of the high-pressure valve develops due to repetitive collision between the poppet and the seat, the pressure-receiving area of the poppet at the side of the high-pressure line increases relative to the pressure-receiving area of the poppet at the side of the working chamber, and the possibility of occurrence of an event may increase, in which the high-pressure valve does not open unless the working-chamber pressure increases further. In this regard, as described in the above (1), it is possible to detect occurrence of abrasion on the ridge of the poppet of the high-pressure valve suitably by focusing on the maximum value of the working-chamber pressure.
(7) A hydraulic machine according to the present invention comprises: a rotor shaft; a cylinder; a piston forming a working chamber together with the cylinder; a high-pressure valve and a low-pressure valve provided for the working chamber; and the diagnosis system according to the invention.

With the above configuration (7), the maximum value of the pressure of the working chamber in each cycle of the reciprocal motion of the piston is obtained. Herein, the maximum value of the working-chamber pressure corresponds to the working-chamber pressure required for the high-pressure valve to open in each cycle. Thus, with the above configuration (7), it is possible to detect a damage (deformation, abrasion, or the like) of the valve body of the high-pressure valve on the basis of the maximum value of the pressure of the working chamber in each cycle of the reciprocal motion of the piston.
(8) In some embodiments, the hydraulic machine is configured to cause the cylinder corresponding to the high-pressure valve to be in an inactive state of not generating a displacement, if the diagnosis system detects the damage of the valve body of the high-pressure valve.

According to the above configuration (8), if a damage of the high-pressure valve is detected, the cylinder corresponding to the high-pressure valve is caused to be in an inactive state, or the high-pressure valve is replaced. In this way, it is possible to operate the hydraulic machine while reducing loads applied to the hydraulic machine when the high-pressure valve is damaged, and thereby to suppress reduction of lifetime of the hydraulic machine.
(9) A hydraulic transmission according to the present invention comprises: a hydraulic pump for generating pressurized oil; a hydraulic motor configured to be driven by the pressurized oil from the hydraulic pump; a high-pressure line connecting an outlet of the hydraulic pump and an inlet of the hydraulic motor; and a low-pressure line connecting an outlet of the hydraulic motor and an inlet of the hydraulic pump. At least one of the hydraulic pump or the hydraulic motor is the hydraulic machine according to the invention.

With the above configuration (9), the maximum value of the pressure of the working chamber in each cycle of the reciprocal motion of the piston is obtained. Herein, the maximum value of the working-chamber pressure corresponds to the working-chamber pressure required for the high-pressure valve to open in each cycle. Thus, with the above configuration (9), it is possible to detect a damage (deformation, abrasion, or the like) of the valve body of the high-pressure valve on the basis of the maximum value of the pressure of the working chamber in each cycle of the reciprocal motion of the piston.
(10) A renewable-energy type power generating apparatus according to the present invention comprises: a rotor configured to receive renewable energy to rotate; a hydraulic pump configured to be driven by the rotor to pressurize working oil; a hydraulic motor configured to be driven by the working oil pressurized by the hydraulic pump; a high-pressure line connecting an outlet of the hydraulic pump and an inlet of the hydraulic motor; a low-pressure line connecting an outlet of the hydraulic motor and an inlet of the hydraulic pump; and a generator configured to be driven by the hydraulic motor. At least one of the hydraulic pump or the hydraulic motor is the hydraulic machine according to the invention.

With the above configuration (10), the maximum value of the pressure of the working chamber in each cycle of the reciprocal motion of the piston is obtained. Herein, the maximum value of the working-chamber pressure corresponds to the working-chamber pressure required for the high-pressure valve to open in each cycle. Thus, with the above configuration (10), it is possible to detect a damage (deformation, abrasion, or the like) of the valve body of the high-pressure valve on the basis of the maximum value of the pressure of the working chamber in each cycle of the reciprocal motion of the piston.
(11) A method, according to the present invention, of diagnosing a hydraulic machine comprises the features of claim 10, wherein the hydraulic machine comprises a rotor shaft, a cylinder, a piston forming a working chamber together with the cylinder, and a high-pressure valve and a low-pressure valve provided for the working chamber, and which is configured to perform conversion between rotational motion of the rotor shaft and reciprocal motion of the piston, comprises: a pressure detecting step of detecting a pressure of the working chamber; and a damage detecting step of detecting a damage of the high-pressure valve, on the basis of a result of detection obtained in the pressure detecting step. The high-pressure valve is a poppet valve which includes a seat, and a poppet configured to contact the seat from a side of a high-pressure line of the hydraulic machine. The damage detecting step comprises detecting the damage of the valve body of the high-pressure valve on the basis of a maximum value of a pressure of the working chamber in each cycle of the reciprocal motion of the piston.

The above described high-pressure valve (poppet valve) opens if a force applied from the side of the working chamber to the poppet is greater than a force applied from the side of the high-pressure line to the poppet (a fluid force or a force that biases the valve body). As a result of intensive researches by the present inventors, it was found that, when the high-pressure valve opens and closes, the poppet repeatedly hits and separates from the seat while being exposed to the high pressure of the high-pressure line, and thereby a damage of the poppet may occur, including deformation and abrasion for instance. Furthermore, according to the findings of the present inventors, if the area of a contact surface of the poppet contacting the seat increases due to such a damage, a pressure-receiving area of the poppet at the side of the high-pressure line increases relative to a pressure-receiving area of the poppet at the side of the working chamber, and thereby an event may occur, in which the high-pressure valve does not open unless the working-chamber pressure increases further.

With this regard, according to the above method (11), the maximum value of the pressure of the working chamber in each cycle of the reciprocal motion of the piston is obtained. Herein, the maximum value of the working-chamber pressure corresponds to the working-chamber pressure required for the high-pressure valve to open in each cycle. Thus, according to the above method (11), it is possible to detect a damage (deformation, abrasion, or the like) of the valve body of the high-pressure valve on the basis of the maximum value of the pressure of the working chamber in each cycle of the reciprocal motion of the piston.
(12) In the invention, the damage detecting step comprises determining that a damage of the valve body of the high-pressure valve exists if Pmax ave+a×σ is at least a threshold, where Pmax_ave is an average of the maximum value of the pressure of the working chamber in a statistical period, σ is a standard deviation of the maximum value of the pressure of the working chamber in the statistical period, and a is a value which satisfies an expression of a ≥ 0.

According to the findings of the present inventors, in a hydraulic machine, the more serious a damage of the valve body of the high-pressure valve is, the greater the maximum value of the working-chamber pressure tends to be in each cycle of the reciprocal motion of the piston.

Thus, as in the above method (12), it is possible to determine presence of a damage of the valve body of the high-pressure valve by comparing a value of Pmax_ave+a×σ to a threshold.
(13) In some embodiments, the damage detecting step comprises evaluating a degree of damage of the valve body of the high-pressure valve on the basis of an increasing rate of Pmax_ave+a×σ in a statistical period, where Pmax_ave is an average of the maximum value of the pressure of the working chamber in the statistical period, σ is a standard deviation of the maximum value of the pressure of the working chamber in the statistical period, and a is a value which satisfies an expression of a ≥ 0.

According to the findings of the present inventors, in a hydraulic machine, the more serious a damage of the valve body of the high-pressure valve is, the greater the maximum value of the working-chamber pressure tends to be in each cycle of the reciprocal motion of the piston. Thus, as in the above method (13), it is possible to determine a degree of damage (development degree of a damaged condition) of the valve body of the high-pressure valve on the basis of an increasing rate of Pmax_ave+a×σ.
(14) In some embodiments, the method further comprises a threshold setting step of determining a threshold on the basis of a statistical value of the maximum value of the pressure of the working chamber in an initial state of the high-pressure valve. The damage detecting step comprises detecting the damage of the valve body of the high-pressure valve on the basis of a result of comparison between the maximum value of the pressure of the working chamber or the statistical value of the maximum value and the threshold set in the threshold setting step.

A waveform that can be obtained by measuring a pressure of a working chamber is different between individual high-pressure valves used in a hydraulic machine.

According to the above method (14), a threshold is determined on the basis of a statistical value of the maximum value of the working-chamber pressure in an initial state of the high-pressure valve, and thereby it is possible to set an appropriate threshold individually for each high-pressure valve.
(15) In some embodiments, the method further comprises causing the cylinder corresponding to the high-pressure valve to be in an inactive state of not generating a displacement, or replacing the high-pressure valve, if a damage of the valve body of the high-pressure valve is detected in the damage detecting step.

According to the above method (15), if a damage of the high-pressure valve is detected, the cylinder corresponding to the high-pressure valve is caused to be in an inactive state, or the high-pressure valve is replaced. In this way, it is possible to operate the hydraulic machine while reducing loads applied to the hydraulic machine when the high-pressure valve is damaged, and thereby to suppress reduction of lifetime of the hydraulic machine.

According to at least an embodiment of the present invention, provided is a diagnosis system for a hydraulic machine, whereby it is possible to detect a damage of a high-pressure valve appropriately.

### BRIEF DESCRIPTION OF DRAWINGS

FIG. 1 is a schematic diagram of a wind turbine power generating apparatus according to an embodiment.
FIG. 2 is a schematic configuration diagram of a hydraulic machine according to an embodiment.
FIG. 3 is a schematic diagram illustrating a configuration of a diagnosis system according to an embodiment.
FIG. 4 is a schematic cross-sectional view of a configuration of a high-pressure valve according to an embodiment.
FIG. 5 is a diagram of a seat portion of a high-pressure valve according to an embodiment.
FIG. 6 is a graph of an example of a frequency distribution of the maximum value of a working-chamber pressure.
FIG. 7 is a graph of an example of a frequency distribution of the maximum value of a working-chamber pressure.
FIG. 8 is a graph of an example of a temporal change of a statistic value of the maximum value of the working-chamber pressure.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not intended to limit the scope of the present invention.

First, an overall configuration of a wind turbine power generating apparatus will be described. The wind turbine power generating apparatus includes a hydraulic machine (hydraulic motor) to which a diagnosis system and a diagnosis method according to an embodiment are to be applied.

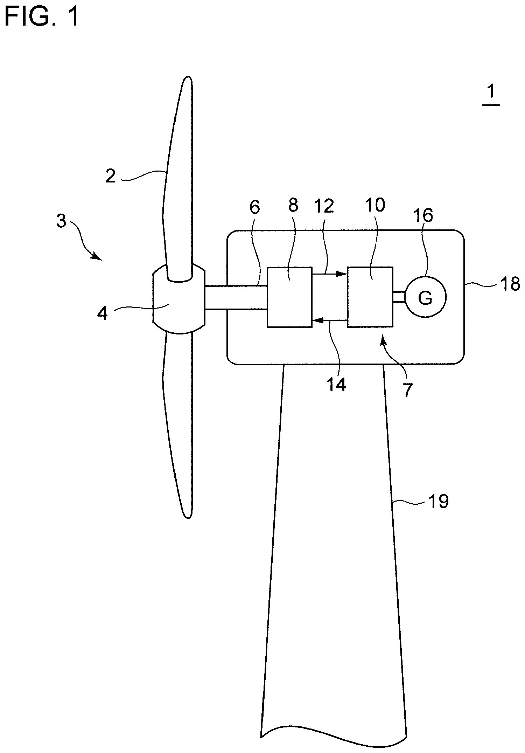

FIG. 1 is a schematic diagram of a wind turbine power generating apparatus according to an embodiment. As illustrated in the drawing, the wind turbine power generating apparatus 1 includes a rotor 3 configured to receive wind, which is a renewable energy, to rotate, a hydraulic transmission 7 for transmitting rotation of the rotor 3, and a generator 16 for generating electric power.

The rotor 3 includes at least one blade 2, and a hub 4 to which the at least one blade 2 is mounted.

The hydraulic transmission 7 includes a hydraulic pump 8 connected to the rotor 3 via a rotary shaft 6, a hydraulic motor 10, a high-pressure line 12 connecting an outlet of the hydraulic pump 8 and an inlet of the hydraulic motor 10, and a low-pressure line 14 connecting an inlet of the hydraulic pump 8 and an outlet of the hydraulic motor 10.

The generator 16 is coupled to the hydraulic motor 10 via an output shaft of the hydraulic motor 10. In an embodiment, the generator 16 is a synchronous generator connected to a utility grid and driven by the hydraulic motor 10.

The hydraulic pump 8, the hydraulic motor 10, and the generator 16 may be disposed inside a nacelle 18 disposed on a tower 19.

In the wind turbine power generating apparatus 1 illustrated in FIG. 1, rotational energy of the rotor 3 is inputted into the generator 16 via the hydraulic transmission 7 including the hydraulic pump 8 and the hydraulic motor 10, and electric power is generated by the generator 16.

When the at least one blade 2 receives wind, the entire rotor 3 rotates in response to the power of wind, so that the hydraulic pump 8 is driven by the rotor 3 to pressurize working oil, thereby producing high-pressure working oil (pressurized oil). The pressurized oil produced by the hydraulic pump 8 is supplied to the hydraulic motor 10 via the high-pressure line 12, and drives the hydraulic motor 10. Electric power is generated by the generator 16 connected to the hydraulic motor 10 via the output shaft. The low-pressure working oil having performed work in the hydraulic motor 10 flows again into the hydraulic pump 8 via the low-pressure line 14.

The hydraulic pump 8 and the hydraulic motor 10 may be of a variable-displacement type whereby the displacement is adjustable.

In some embodiments, at least one of the above described hydraulic pump or the hydraulic motor 10 is a hydraulic machine 20 described below.

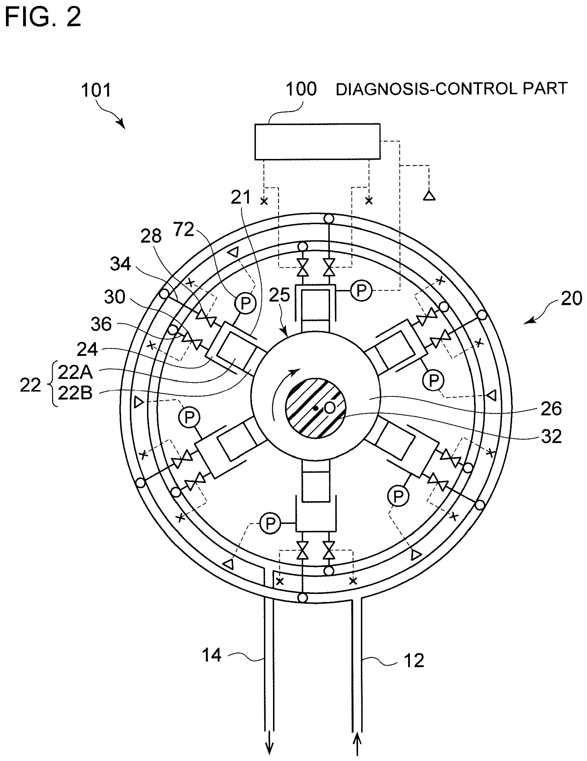

Next, configuration of a hydraulic machine according to an embodiment will be described. FIG. 2 is a schematic configuration diagram of a hydraulic machine according to an embodiment.

As illustrated in FIG. 2, the hydraulic machine 20 to be diagnosed by a diagnosis system and a diagnosis method according to an embodiment includes a rotary shaft 32, a cylinder 21, a piston 22 forming a working chamber 24 together with the cylinder 21, a high-pressure valve 28 and a low-pressure valve 30 provided for the working chamber 24, and a cam 26 (conversion mechanism) for performing conversion between the reciprocal motion of the piston 22 and the rotational motion of the rotary shaft 32. The cam 26 has a cam curved surface configured to contact the piston 22.

In the hydraulic machine 20, a plurality of cylinders 21 and a plurality of pistons 22 are disposed along the circumferential direction of the hydraulic machine 20.

The piston 22 preferably includes a piston body 22A which slides inside the cylinder 21, and a piston roller or a piston shoe which is attached to the piston body 22A and which contacts the cam curved surface of the cam 26, from the viewpoint of smooth conversion of the reciprocal motion of the piston 22 into the rotational motion of the rotary shaft 32. In the example illustrated in FIG. 2, the piston 22 includes a piston body 22A and a piston shoe 22B.

The cam 26 is an eccentric cam disposed eccentrically from the axial center O of the rotary shaft (crank shaft) 32 of the hydraulic machine 20. While the piston 22 performs a set of upward and downward movement, the cam 26 and the rotary shaft 32 to which the cam 26 is mounted perform one revolution.

In another embodiment, the cam 26 is an annular-shaped multi-lobed cam (ring cam) with a plurality of lobes (projections). In this case, while the cam 26 and the rotary shaft 32 to which the cam 26 is mounted perform one revolution, the piston 22 performs as many sets of upward and downward movement as the number of lobes.

The high-pressure valve 28 is disposed in a high-pressure communication line 34 between the working chamber 24 and the high-pressure line 12 disposed outside the working chamber 24, and configured to be capable of switching the communication state between the working chamber 24 and the high-pressure line 12. The low-pressure valve 30 is disposed in a low-pressure communication line 36 between the working chamber 24 and the low-pressure line 14 disposed outside the working chamber 24, and configured to be capable of switching the communication state between the working chamber 24 and the low-pressure line 14.

Each piston 22 is disposed slidably inside corresponding one of the cylinders 21. Each piston 22 is guided by the corresponding cylinder 21, so as to reciprocate between the bottom dead center and the top dead center along the central axis of the cylinder 21. As a result of the reciprocal motion of the piston 22, the capacity of the working chamber 24 surrounded by the corresponding cylinder 21 and piston 22 changes cyclically.

The mode of motion is converted between such reciprocal motion of the piston 22 accompanied by the cyclic capacity change of the working chamber 24 and the rotational motion of the cam 26.

For instance, if the hydraulic machine 20 is the hydraulic pump 8, rotation of the cam 26 along with the rotary shaft 32 moves the pistons 22 upward and downward cyclically in accordance with a cam surface, so that each piston 22 repeats a pump stroke of moving from the bottom dead center toward the top dead center and a suction stroke of moving from the top dead center toward the bottom dead center. Thus, the capacity of the working chamber 24 formed by the piston 22 and the inner wall surface of the cylinder 21 changes cyclically. In other words, in the hydraulic pump 8, the high-pressure valve 28 is closed and the low-pressure valve 30 is opened during the suction stroke to cause working oil to flow into the working chamber 24 from the low-pressure line 14, and the high-pressure valve 28 is opened and the low-pressure valve 30 is closed during the pump stroke to send out the compressed working oil from the working chamber 24 to the high-pressure line 12.

As described above, the rotational motion of the cam 26 rotating with the rotary shaft 32 of the hydraulic machine 20 is converted into the reciprocal motion of the piston 22, so that the cyclic capacity change of the working chamber 24 takes place and high-pressure working oil (pressurized oil) is produced in the working chamber 24.

If the hydraulic machine 20 is the hydraulic motor 10, a differential pressure between the high-pressure line 12 and the low-pressure line 14 created by the hydraulic pump 8 moves the pistons 22 upward and downward cyclically, so that each piston 22 repeats a motor stroke of moving toward the bottom dead center from the top dead center and a discharge stroke of moving toward the top dead center from the bottom dead center. While the hydraulic motor 10 is operating, the capacity of the working chamber 24 formed by the piston 22 and the inner wall surface of the cylinder 21 changes cyclically. In other words, in the hydraulic motor 10, the high-pressure valve 28 is opened and the low-pressure valve 30 is closed during the motor stroke to permit working oil to flow into the working chamber 24 from the high-pressure line 12, and the high-pressure valve 28 is closed and the low-pressure valve 30 is opened during the discharge stroke to send out the working oil having performed work in the working chamber 24 to the low-pressure line 14.

As described above, pressurized oil is introduced into the working chamber 24 to cause reciprocal motion of the piston 22, and the reciprocal motion is converted into rotational motion of the cam 26, so that the rotary shaft 32 of the hydraulic machine 20 rotates with the cam 26.

As described above, as a result of the function of the cam 26, energy is converted between the rotational energy (mechanical energy) of the rotary shaft 32 of the hydraulic machine 20 and the fluid energy of the working oil, so that the hydraulic machine 20 performs the predetermined function as the hydraulic pump 8 or the hydraulic motor 10.

The diagnosis system 101 including the diagnosis-control part 100 is configured to detect a damage of the high-pressure valve 28 of the hydraulic machine 20 (the hydraulic pump 8 or the hydraulic motor 10) having the above described configuration.

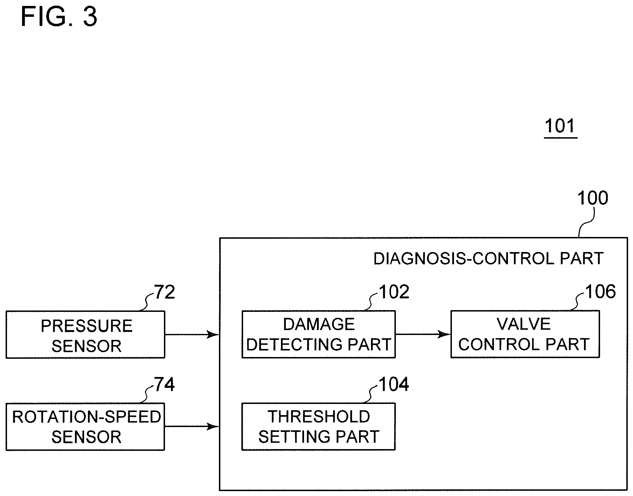

FIG. 3 is a schematic configuration diagram of a diagnosis system according to an embodiment.

As depicted in FIG. 3, the diagnosis system 101 of the hydraulic machine includes a pressure sensor 72 for detecting a pressure of each working chamber 24 of the hydraulic machine 20, a rotation-speed sensor 74 for detecting a rotation speed of the rotary shaft 32, and a diagnosis-control part 100 for diagnosing and controlling the hydraulic machine 20 on the basis of a result of detection by the pressure sensor 72 and/or the rotation-speed sensor 74.

The diagnosis-control part 100 of the diagnosis system 101 includes a damage detecting part 102, a threshold setting part 104, and a valve control part 106. The diagnosis system 101 is configured to detect a damage of the high-pressure valve 28 of the hydraulic machine 20 as described below.

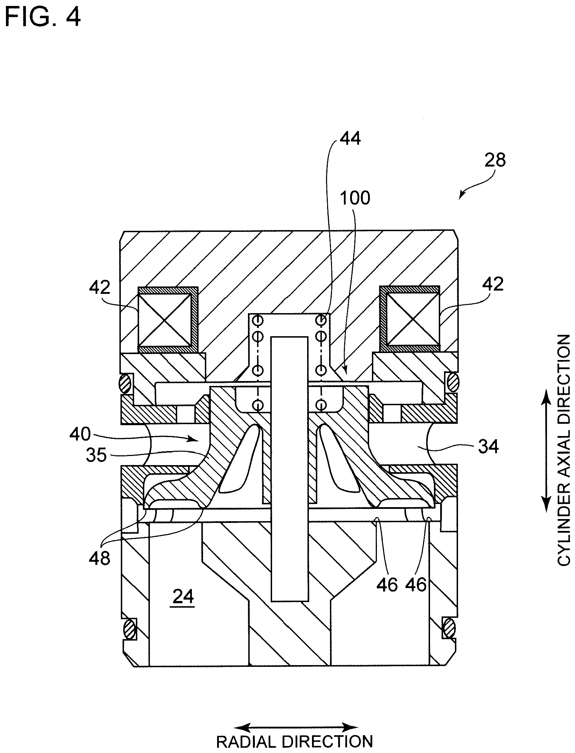

FIG. 4 is a schematic cross-sectional view of a configuration of the high-pressure valve 28 according to some embodiments. The high-pressure valve 28 illustrated in FIG. 4 includes a movable unit 40 including a poppet (valve body) 35, a solenoid coil 42 that functions as an actuator for moving the movable unit 40 between a valve-open position and a valve-closed position, a spring 44, and a seat 46. The high-pressure valve 28 depicted in FIG. 4 is a poppet solenoid valve of normally-closed type, and is configured such that the poppet 35 contacts the seat 46 from the side of the high-pressure line 12 (i.e., from the side of the high-pressure communication line 34) of the hydraulic machine 20.

Further, the high-pressure valve 28 depicted in FIG. 4 includes a ridge 48 protruding toward the seat 46 from the poppet 35. While the high-pressure valve 28 is closed, the ridge 48 contacts the seat 46, and thereby the high-pressure line 12 and the working chamber 24 come into a non-communicating state.

The high-pressure valve 28 is capable of switching the communication state between the working chamber 24 and the high-pressure line 12 (or the high-pressure communication line 34) (see FIG. 2) by movement of the movable unit 40 caused by the electromagnetic force of the solenoid coil 42 or the biasing force of the spring 44.

The high-pressure valve 28 depicted in FIG. 4 is controlled to open and close by control signals (opening/closing command) sent from a valve controller. In some embodiments, the valve control part 106 (see FIG. 3) of the diagnosis-control part 100 provides the high-pressure valve 28 with control signals of the opening/closing command.

The high-pressure valve 28 depicted in FIG. 4 is a solenoid valve of normally-closed type. Specifically, when the high-pressure valve 28 is not excited by a control signal from the valve control part 106, the movable unit 40 is biased toward the seat 46 by the spring 44, so as to be retained in a position such that the working chamber 24 and the high-pressure line 12 are not in communication (normal position). When the high-pressure valve 28 is excited by a control signal from the valve control part 106, the movable unit 40 moves to a position such that the working chamber 24 and the high-pressure line 12 communicate with each other by the electromagnetic force, against the biasing force of the spring 44 (excitation position).

In some embodiments, the high-pressure valve 28 may not be the solenoid valve depicted in FIG. 4. In an embodiment, the high-pressure valve 28 of the hydraulic machine 20 may be a check valve of poppet type configured to permit only a flow of working oil flowing toward the high-pressure line 12 from the working chamber 24.

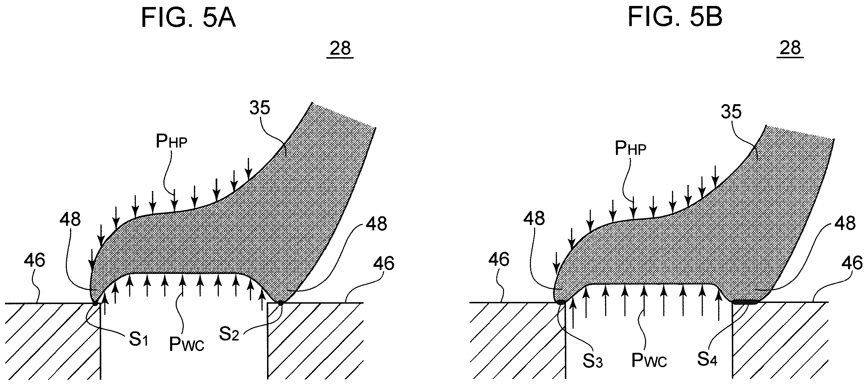

FIGs. 5A and 5B are diagrams showing contacting sections of the poppet 35 and the seat 46 of the high-pressure valve 28. The poppet 35 depicted in FIG. 5A is a poppet in an initial (brand-new) state, while the poppet 35 in FIG. 5B is a poppet after being used for a certain period to develop abrasion on a distal end on the poppet 35.

The above described high-pressure valve (poppet valve) 28 (e.g. the high-pressure valve 28 depicted in FIG. 4) opens if a force applied to the poppet 35 from the side of the working chamber 24 is greater than a force applied to the poppet 35 from the side of the high-pressure line 12 (a fluid force of high-pressure oil or a biasing force from the spring 44). When the high-pressure valve 28 opens and closes, the poppet 35 repeatedly hits and separates from the seat 46 while being exposed to the high pressure of the high-pressure line 12, which may bring about a damage of the poppet 35, such as deformation and abrasion, as depicted in FIG. 5B.

In case of such a damage, the area of a contact surface at which the poppet 35 contacts the seat 46 increases. For instance, the area of the contact surface in FIG. 5A is S1 and S2, whereas the area of the contact surface in FIG. 5B is S3 and S4, which is larger than that in FIG. 5A.

In this case, the pressure-receiving area of the poppet 35 at the side of the high-pressure line 12 (in FIGs. 5A and 5B, an area that receives a pressure P_{HP}) increases relative to the pressure-receiving area of the poppet 35 at the side of the working chamber 24 (in FIGs. 5A and 5B, an area that receives pressure P_{WC}). Thus, in the case depicted in FIG. 5B, there may be an event in which the high-pressure valve 28 does not open unless the pressure inside the working chamber 24 increases further, as compared to the case of FIG. 5A.

If the poppet 35 has the ridge 48 in particular, as in the high-pressure valve 28 depicted in FIG. 4, the pressure-receiving area of the poppet 35 at the side of the high-pressure line 12 increases relative to the pressure-receiving area at the side of the working chamber with development of abrasion on a distal end of the ridge 48 due to repetitive collision between the poppet 35 and the seat 46, which raises the possibility of the event in which the high-pressure valve 28 does not open unless the working-chamber pressure increases further.

A method of diagnosing the hydraulic machine 20 according to some embodiments is to detect a damage such as abrasion to the high-pressure valve 28 by focusing on the above event.

In the method of diagnosing the hydraulic machine 20 according to some embodiments, the pressure of the working chamber 24 (working-chamber pressure) is detected (pressure detecting step). In the pressure detecting step, the working-chamber pressure of each cylinder 21 may be detected by using the pressure sensor 72 disposed on each cylinder 21 of the hydraulic machine 20.

Next, on the basis of a result of detection of the working-chamber pressure in the pressure detecting step, a damage of the high-pressure valve 28 is detected (damage detecting step). The damage detecting step may be performed by the damage detecting part 102 (see FIG. 3).

If it is determined that a damage exists in the high-pressure valve 28 in the damage detecting step, the cylinder 21 corresponding to the high-pressure valve 28 may be brought into an inactive state of not generating a displacement, from among the cylinders 21 of the hydraulic machine 20. Alternatively, if it is determined that a damage exists in the high-pressure valve 28 in the damage detecting step, the high-pressure valve 28 may be replaced.

To bring the cylinder 21 of the hydraulic machine 20 into an inactive state, the valve control part 106 (see FIG. 3) sends a suitable control signal of an opening/closing command to the high-pressure valve 28 and the low-pressure valve 30 corresponding to the cylinder 21. To bring the cylinder 21 into an inactive state in the hydraulic machine 20 (hydraulic motor 10 or a hydraulic pump), the high-pressure valve 28 corresponding to the cylinder 21 is kept closed, and the low-pressure valve 30 is kept open. Accordingly, the cylinder 21 and the high-pressure line 12 come into a non-communicating state, while the cylinder 21 and the low-pressure line 14 come into a communicating state, and thereby working oil flows in and out only between the working chamber 24 and the low-pressure line 14. Thus, the piston 22 corresponding to the cylinder 21 does not perform any substantial work, or no substantially work is performed on the piston 22.

The damage detecting step according to some embodiments now will be described in more detail.

In an embodiment, in the damage detecting step, a damage of the valve body of the high-pressure valve 28 is detected on the basis of the maximum value Pmax of the pressure of the working chamber 24 (working-chamber pressure) of each cycle of the reciprocal motion of the piston 22.

The maximum value Pmax of the working-chamber pressure of each cycle of the reciprocal motion of the piston 22 corresponds to the working-chamber pressure required for the high-pressure valve 28 to open in each cycle. As described above with reference to FIG. 5, if a damage such as abrasion develops on the poppet (valve body) 35 and the pressure-receiving area of the poppet 35 at the side of the high-pressure line 12 increases relative to the pressure-receiving area at the side of the working chamber 24, the high-pressure valve 28 may remain closed until the pressure of the working chamber 24 increases further.

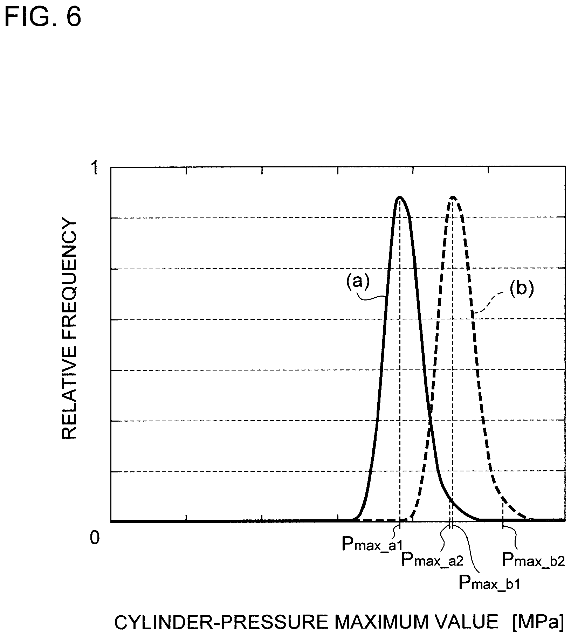

FIG. 6 is a graph showing an example of a frequency distribution of the maximum value Pmax of the working-chamber pressure obtained in each cycle for each of the two cases (a) and (b) of the high-pressure valve 28 depicted in FIGs. 5A and 5B, respectively. In the graph of FIG. 6, y-axis represents a relative frequency, and x-axis represents the maximum value Pmax of a working-chamber pressure (cylinder pressure). Furthermore, in the graph of FIG. 6, (a) is a frequency distribution of the case in FIG. 5A (the poppet 35 is in an initial state), and (b) is a frequency distribution of the case in FIG. 5B (the damage of the poppet 35 has developed to some extent). Pmax_a1 and Pmax_b1 are Pmax_ave for the cases (a) and (b), respectively, where Pmax ave is an average of the maximum value Pmax of the working-chamber pressure in a statistical period Ts, while Pmax_a2 and Pmax_b2 are Pmax_ave+a×σ for the cases (a) and (b), respectively, where σ is a standard deviation of the maximum value Pmax of the working-chamber pressure in the statistical period Ts, and "a" is a value satisfying an expression of a ≥ 0. In the above expression, it is assumed herein that a=3, for example.

Pmax_ave and Pmax_ave+a×σ are each a statistical value of the maximum value Pmax of the working-chamber pressure.

According to the graph in FIG. 6, the frequency distribution of the maximum value of the working-chamber pressure in the case (b) is generally closer to the high-pressure side than that in the case (a). Further, with regard to the average values Pmax_ave and Pmax_ave+a×σ of the maximum value Pmax of the working-chamber pressure, Pmax_b1 and Pmax_b2 in the case (b) are greater than Pmax al and Pmax_a2 in the case (a), respectively.

As described above, in the high-pressure valve 28, the maximum value of the working-chamber pressure calculated in each cycle of the reciprocal motion of the piston 22 is different between the case (a) of the poppet 35 in an initial state with no damage, and the case (b) of the poppet 35 being used for a certain operation period and having a damage.

Thus, as described above, it is possible to detect a damage (deformation, abrasion, or the like) of the valve body (poppet) 35 of the high-pressure valve 28 on the basis of the maximum value of the pressure of the working chamber 24 in each cycle of the reciprocal motion of the piston 22.

For instance, it is possible to detect a damage (deformation, abrasion, or the like) of the poppet 35 of the high-pressure valve 28 by monitoring Pmax_ave or Pmax_ave+a×σ obtained in each cycle of the reciprocal motion of the piston 22.

As described above, the maximum value Pmax of the working-chamber pressure tends to increase with development (expansion) of a damage such as abrasion to the high-pressure valve 28.

In view of this, in an embodiment, in the damage detecting step, it may be determined that a damage exists in the poppet (valve body) 35 of the high-pressure valve 28 if the average (Pmax_ave) of the maximum value Pmax of the working-chamber pressure is at least a threshold.

Further, in an embodiment, in the damage detecting step, it may be determined that a damage exists in the poppet (valve body) 35 of the high-pressure valve 28 if Pmax_ave+a×σ (a ≥ 0) is at least a threshold.

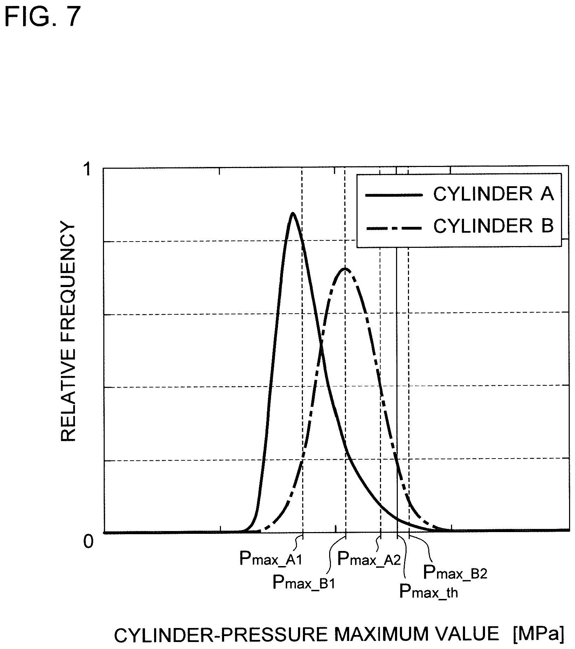

FIG. 7 is a graph showing an example of a frequency distribution of the maximum value Pmax of the working-chamber pressure obtained in each piston cycle for two cylinders A, B in the hydraulic machine 20. In FIG. 7, Pmax_A2 and Pmax_B2 represent Pmax_ave+3×σ calculated for the cylinders A and B, respectively, and Pmax_th represents a threshold related to Pmax_ave+3×σ set for each cylinder in the hydraulic machine 20.

In the graph of FIG. 7, Pmax_A2 calculated for the cylinder A is smaller than the threshold Pmax_th, and thus it is determined that no damage exists in the high-pressure valve 28 in the cylinder A.

In contrast, Pmax_B2 calculated for the cylinder B is greater than the threshold Pmax_th, and thus it is determined that a damage exists in the high-pressure valve 28 in the cylinder B.

As described above, for each of the plurality of cylinders 21 constituting the hydraulic machine 20, Pmax_ave+3×σ (which may be Pmax_ave) is calculated and compared to a threshold, and thereby it is possible to specify the cylinder 21 having a damage in the high-pressure valve 28, from among the plurality of cylinders 21.

Furthermore, the cylinder 21 specified as having a damage in the high-pressure valve 28 may be brought into an inactive state of not generating a displacement as described above, or alternatively, the high-pressure valve 28 may be replaced. In this way, it is possible to operate the hydraulic machine 20 while reducing loads applied to the hydraulic machine 20 when the high-pressure valve 28 is damaged, and thereby to suppress reduction of lifetime of the hydraulic machine 20.

The average (Pmax_ave) of the maximum value Pmax of the working-chamber pressure or the threshold of the above described Pmax_ave+a×σ may be determined by the threshold setting part 104 of the diagnosis-control part 100.

These thresholds may be determined taking account of the lifetime or the like of a constituent member of the hydraulic machine 20 other than the high-pressure valve 28, such as a valve block accommodating the high-pressure valve 28.

Furthermore, these thresholds may be determined on the basis of a statistical value of the maximum value Pmax of the pressure of the working chamber 24 of the high-pressure valve 28 in an initial state (brand-new product).

For instance, if Pmax_ave+3×σ is used to detect a damage of the high-pressure valve 28, Pmax_ave+3×σ+α of a brand-new product of the high-pressure valve 28 subject to damage detection in a predetermined period may be used as a threshold to be compared to the statistical value, where α is a safety factor and satisfies an expression α ≥ 0.

The threshold may be set individually for each of the plurality of high-pressure valves 28 subject to damage detection.

In an embodiment, in the damage detecting step, the degree of damage (development degree of a damage condition) of the valve body (poppet) 35 of the high-pressure valve 28 is evaluated on the basis of an increasing rate in a statistical period of Pmax_ave or Pmax_ave+a×σ (a ≥ 0).

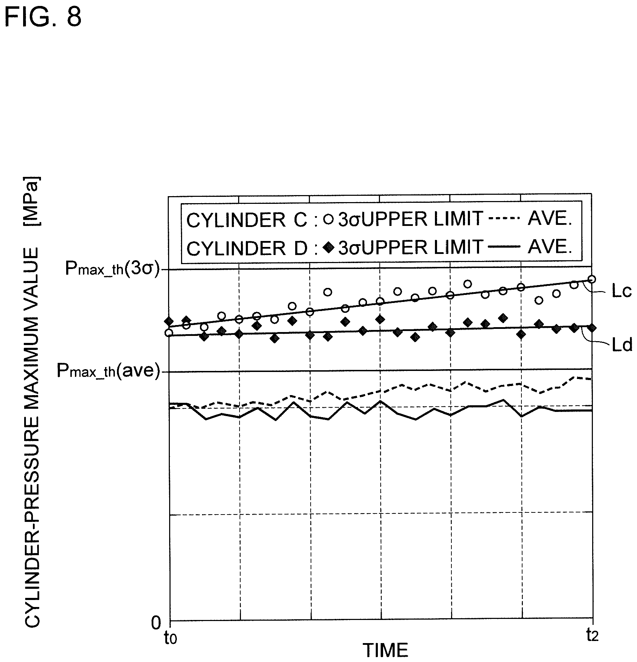

FIG. 8 is a graph showing an example of a temporal change of Pmax ave and Pmax_ave+3×σ (in the drawing, labeled as "3σ upper limit") calculated for every predetermined period (e.g. every 10 minutes) for two cylinders C and D in the hydraulic machine 20. In the drawing, Pmax_th(ave) is a threshold of Pmax ave in the hydraulic machine 20 to be diagnosed, and Pmax_th(3σ) is a threshold of Pmax_ave+3×σ in the hydraulic machine 20 to be diagnosed. In the present embodiment, the threshold is set in common for both the cylinders C and D.

It is possible to predict the time it takes to reach the threshold by calculating a statistical value at a certain point of time and an increasing rate (inclination in the graph of the drawing) of the statistical value with respect to time on the basis of the time-series data of Pmax_ave or Pmax_ave+3×σ.

For instance, in the graph of FIG. 8, focusing on Pmax_ave+3×σ (3σ upper limit) of each cylinder, it is possible to predict a residual lifetime of each cylinder (i.e., time before the "3σ upper limit" value of each cylinder reaches a threshold) from the "3σ upper limit" value at time t₁ and the value of the increasing rate of "3σ upper limit" during a selected statistical period (herein, time t₀ to t₁), where the increasing rate includes inclinations c, d of approximate lines Lc, Ld of respective data in the period.

According to the graph of FIG. 8, the above described inclination c of the cylinder C is greater than inclination d of the cylinder D, and the "3σ upper limit" value at time t₁ is also greater in the cylinder C, and thereby it is possible to estimate that the cylinder C has a shorter residual lifetime.

As described above, the degree of damage (development degree of a damage condition) of the valve body (poppet) 35 of the high-pressure valve 28 can be evaluated by monitoring the trend of Pmax_ave or Pmax_ave+a×σ in a statistical period.

In an embodiment, in the damage detecting step, a damage of the valve body (poppet 35) of the high-pressure valve 28 may be detected on the basis of the number of times that the maximum value Pmax of the working-chamber pressure exceeds a threshold.

As described above, in the hydraulic machine 20, the more serious a damage of the valve body (poppet 35) of the high-pressure valve 28 is, the greater the maximum value Pmax of the working-chamber pressure tends to be in each cycle of the reciprocal motion of the piston 22. Thus, presence of a damage of the valve body (poppet 35) of the high-pressure valve 28 can be detected on the basis of the number of times that the maximum value Pmax of the working-chamber pressure exceeds a threshold.

For instance, in an embodiment, in the damage detecting step, it may be determined that a damage exists in the valve body (poppet 35) of the high-pressure valve 28 if the maximum value Pmax of the working-chamber pressure exceeds a threshold for more than a predetermined number of times.

Embodiments of the present invention, which is defined by the appended claims, were described in detail above, but the present invention is not limited thereto, and various amendments and modifications may be implemented.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

## Claims

1. A diagnosis system (101) for a hydraulic machine (20) which comprises a rotor shaft (32), a cylinder (21), a piston (22) forming a working chamber (24) together with the cylinder (21), a high-pressure valve (28) and a low-pressure valve (30) provided for the working chamber (24), wherein the high-pressure valve (28) is a poppet valve which includes a seat (46) and a valve body (35) being a poppet configured to be in contact with the seat (46) from a side of a high-pressure line (12) of the hydraulic machine (20), and wherein the hydraulic machine (20) is configured to perform conversion between rotational motion of the rotor shaft (32) and reciprocal motion of the piston (22), the diagnosis system (101) comprising:
a pressure sensor (72) for detecting a pressure of the working chamber (24); and
a damage detecting part (102) for detecting the damage of the high-pressure valve (28) on the basis of a result of detection obtained by the pressure sensor (72),
wherein the damage detecting part (102) is configured to detect the damage of the valve body (35) of the high-pressure valve (28) on the basis of a maximum value of a pressure of the working chamber (24) in each cycle of the reciprocal motion of the piston (22), and
wherein the damage detecting part (102) is configured to determine that a damage of the valve body (35) of the high-pressure valve (28) exists if Pmax_ave+a×σ is at least a threshold, where Pmax_ave is an average of the maximum value of the pressure of the working chamber (24) in a statistical period, σ is a standard deviation of the maximum value of the pressure of the working chamber (24) in the statistical period, and a is a value which satisfies an expression of a ≥ 0.

2. The diagnosis system (102) for a hydraulic machine (20) according to claim 1,
wherein the damage detecting part (102) is configured to evaluate a degree of damage of the valve body (35) of the high-pressure valve (28) on the basis of an increasing rate of Pmax_ave+a×σ in a statistical period, where Pmax_ave is an average of the maximum value of the pressure of the working chamber (24) in the statistical period, σ is a standard deviation of the maximum value of the pressure of the working chamber (24) in the statistical period, and a is a value which satisfies an expression of a ≥ 0.

3. The diagnosis system (102) for a hydraulic machine (20) according to claim 1 or 2,
wherein the damage detecting part (102) is configured to detect the damage of the valve body (35) of the high-pressure valve (28) on the basis of the number of times that the maximum value of the pressure of the working chamber (24) exceeds a threshold.

4. The diagnosis system (102) for a hydraulic machine (20) according to any one of claims 1 to 3, further comprising a threshold setting part (104) configured to determine a threshold on the basis of a statistical value of the maximum value of the pressure of the working chamber (24) in an initial state of the high-pressure valve (28),
wherein the damage detecting part (102) is configured to detect the damage of the valve body (35) of the high-pressure valve (28) on the basis of a result of comparison between the maximum value of the pressure of the working chamber (24) or the statistical value of the maximum value and the threshold set by the threshold setting part (104).

5. A hydraulic machine (20), further comprising:
a rotor shaft (32);
a cylinder (21);
a piston (22) forming a working chamber (24) together with the cylinder (21);
a high-pressure valve (28) and a low-pressure valve (30) provided for the working chamber (24), wherein the high-pressure valve (28) is a poppet valve which includes a seat (46) and a valve body (35) being a poppet configured to be in contact with the seat (46) from a side of a high-pressure line (12) of the hydraulic machine (20); and
the diagnosis system (101) according to any one of claims 1 to 4.

6. The hydraulic machine (20) according to claim 5,
wherein the high-pressure valve (28) comprises a ridge (48) protruding toward the seat (46) from the valve body (35), and
wherein the high-pressure valve (28) is configured to cause the high-pressure line (12) and the working chamber (24) to be in a non-communicating state by the ridge (48) of the valve body (35) permitted to be in contact with the seat (46), in a closed state of the high-pressure valve (28).

7. The hydraulic machine (20) according to claim 5 or 6 configured to cause the cylinder (21) corresponding to the high-pressure valve (28) to be in an inactive state of not generating a displacement, if the diagnosis system (101) detects the damage of the valve body (35) of the high-pressure valve (28).

8. A hydraulic transmission, comprising:
a hydraulic pump (8) for generating pressurized oil;
a hydraulic motor (10) configured to be driven by the pressurized oil from the hydraulic pump (8);
a high-pressure line (12) connecting an outlet of the hydraulic pump (8) and an inlet of the hydraulic motor (10); and
a low-pressure line (14) connecting an outlet of the hydraulic motor (10) and an inlet of the hydraulic pump (8),
wherein at least one of the hydraulic pump (8) or the hydraulic motor (10) is the hydraulic machine (20) according to claim 5, 6 or 7.

9. A renewable-energy type power generating apparatus (1), comprising:
a rotor (3) configured to receive renewable energy to rotate;
a hydraulic pump (8) configured to be driven by the rotor (3) to pressurize working oil;
a hydraulic motor (10) configured to be driven by the working oil pressurized by the hydraulic pump (8);
a high-pressure line (12) connecting an outlet of the hydraulic pump (8) and an inlet of the hydraulic motor (10);
a low-pressure line (14) connecting an outlet of the hydraulic motor (10) and an inlet of the hydraulic pump (8); and
a generator (16) configured to be driven by the hydraulic motor (10),
wherein at least one of the hydraulic pump (8) or the hydraulic motor (10) is the hydraulic machine (20) according to claim 5, 6 or 7.

10. A method of diagnosing a hydraulic machine (20) which comprises a rotor shaft (32), a cylinder (21), a piston (22) forming a working chamber (24) together with the cylinder (21), a high-pressure valve (28) and a low-pressure valve (30) provided for the working chamber (24), wherein the high-pressure valve (28) is a poppet valve which includes a seat (46) and a valve body (35) being a poppet configured to be in contact with the seat (46) from a side of a high-pressure line (12) of the hydraulic machine (20), and wherein the hydraulic machine (20) is configured to perform conversion between rotational motion of the rotor shaft (32) and reciprocal motion of the piston (22), the method comprising:
a pressure detecting step of detecting a pressure of the working chamber (24); and
a damage detecting step of detecting a damage of the high-pressure valve (28), on the basis of a result of detection obtained in the pressure detecting step,
wherein the damage detecting step comprises detecting the damage of the valve body (35) of the high-pressure valve (28) on the basis of a maximum value of a pressure of the working chamber (24) in each cycle of the reciprocal motion of the piston (22), and
wherein the damage detecting step comprises determining that a damage of the valve body (35) of the high-pressure valve (28) exists if Pmax_ave+a×σ is at least a threshold, where Pmax_ave is an average of the maximum value of the pressure of the working chamber (24) in a statistical period, o is a standard deviation of the maximum value of the pressure of the working chamber (24) in the statistical period, and a is a value which satisfies an expression of a ≥ 0.

11. The method of diagnosing a hydraulic machine (20) according to claim 10,
wherein the damage detecting step comprises evaluating a degree of damage of the valve body (35) of the high-pressure valve (28) on the basis of an increasing rate of Pmax_ave+a×σ in a statistical period, where Pmax_ave is an average of the maximum value of the pressure of the working chamber (24) in the statistical period, σ is a standard deviation of the maximum value of the pressure of the working chamber (24) in the statistical period, and a is a value which satisfies an expression of a ≥ 0.

12. The method of diagnosing a hydraulic machine (20) according to claim 9 or 10, further comprising a threshold setting step of determining a threshold on the basis of a statistical value of the maximum value of the pressure of the working chamber (24) in an initial state of the high-pressure valve (28),
wherein the damage detecting step comprises detecting the damage of the valve body (35) of the high-pressure valve (28) on the basis of a result of comparison between the maximum value of the pressure of the working chamber (24) or the statistical value of the maximum value and the threshold set in the threshold setting step.

13. The method of diagnosing a hydraulic machine (20) according to any one of claims 10 to 12,
further comprising permitting the cylinder (21) corresponding to the high-pressure valve (28) to be in an inactive state of not generating a displacement, or replacing the high-pressure valve (28), if a damage of the valve body (35) of the high-pressure valve (28) is detected in the damage detecting step.

## Patentansprüche

1. Ein Diagnosesystem (101) für eine Hydraulikmaschine (20), die eine Rotorwelle (32), einen Zylinder (21), einen Kolben (22), welcher zusammen mit dem Zylinder (21) eine Arbeitskammer (24) bildet, ein Hochdruckventil (28) und ein Niederdruckventil (30), welche für die Arbeitskammer (24) vorgesehen sind, aufweist, wobei das Hochdruckventil (28) ein Sitz- oder Tellerventil ist, das einen Sitz (46) und einen Ventilkörper (35), welcher ein Teller ist, der ausgestaltet ist, um in Kontakt mit dem Sitz (46) von einer Seite einer Hochdruckleitung (12) der Hydraulikmaschine (20) zu sein, aufweist, und wobei die Hydraulikmaschine (20) konfiguriert ist, um eine Umwandlung zwischen einer Drehbewegung der Rotorwelle (32) und einer Hin-und-Herbewegung des Kolbens (22) auszuführen, wobei das Diagnosesystem (101) aufweist:
einen Drucksensor (72) zum Erfassen eines Drucks der Arbeitskammer (24), und
ein Beschädigungserfassungsteil (102) zum Erfassen der Beschädigung des Hochdruckventils (28) auf der Basis eines Ergebnisses der Erfassung, die durch den Drucksensor (72) erhalten wird,
wobei das Beschädigungserfassungsteil (102) konfiguriert ist, um die Beschädigung des Ventilkörpers (35) des Hochdruckventils (28) auf der Basis eines Maximalwerts eines Drucks der Arbeitskammer (24) bei jedem Zyklus der Hin-und-Herbewegung des Kolbens (22) zu erfassen, und
wobei das Beschädigungserfassungsteil (102) konfiguriert ist, um zu bestimmen, dass eine Beschädigung des Ventilkörpers (35) des Hochdruckventils (28) vorliegt, wenn Pmax_ave+a*σ zumindest ein Schwellenwert ist, wobei Pmax_ave ein Durchschnitt des Maximalwerts des Drucks der Arbeitskammer (24) in einer statistischen Periode ist, σ eine Standardabweichung des Maximalwerts des Drucks der Arbeitskammer (24) in der statistischen Periode ist, und a ein Wert ist, der einen Ausdruck von a≥0 erfüllt.

2. Das Diagnosesystem (102) für eine Hydraulikmaschine (20) gemäß Anspruch 1,
wobei das Beschädigungserfassungsteil (102) konfiguriert ist, um ein Ausmaß einer Beschädigung des Ventilkörpers (35) des Hochdruckventils (28) auf der Basis eines Anstiegs von Pmax_ave+a*σ in einer statistischen Periode zu bewerten, wobei Pmax ave ein Durchschnitt des Maximalwerts des Drucks der Arbeitskammer (24) in der statistischen Periode ist, σ eine Standardabweichung des Maximalwerts des Drucks der Arbeitskammer (24) in der statistischen Periode ist, und a ein Wert ist, der einen Ausdruck von a≥0 erfüllt.

3. Das Diagnosesystem (102) für eine Hydraulikmaschine (20) gemäß Anspruch 1 oder 2,
wobei das Beschädigungserfassungsteil (102) konfiguriert ist, um die Beschädigung des Ventilkörpers (35) des Hochdruckventils (28) auf der Basis der Anzahl von Malen, die der Maximalwert des Drucks der Arbeitskammer (24) einen Schwellenwert übersteigt, zu erfassen.

4. Das Diagnosesystem (102) für eine Hydraulikmaschine (20) gemäß einem der Ansprüche 1 bis 3, ferner mit einem Schwellenwerteinstellteil (104), das konfiguriert ist, um einen Schwellenwert auf der Basis eines statistischen Werts des Maximalwerts des Drucks der Arbeitskammer (24) in einem Ausgangszustand des Hochdruckventils (28) zu bestimmen,
wobei das Beschädigungserfassungsteil (102) konfiguriert ist, um die Beschädigung des Ventilkörpers (35) des Hochdruckventils (28) auf der Basis eines Ergebnisses eines Vergleichs zwischen dem Maximalwert des Drucks der Arbeitskammer (24) oder dem statistischen Wert des Maximalwerts und dem Schwellenwert, der durch das Schwellenwerteinstellteil (104) eingestellt ist, zu erfassen.

5. Eine Hydraulikmaschine (20), ferner mit:
einer Rotorwelle (32),
einem Zylinder (21),
einem Kolben (22), der zusammen mit dem Zylinder (21) eine Arbeitskammer (24) bildet,
einem Hochdruckventil (28) und einem Niederdruckventil (30), die für die Arbeitskammer (24) vorgesehen sind, wobei das Hochdruckventil (28) ein Sitz- bzw. Tellerventil ist, das einen Sitz (46) und einen Ventilkörper (35), der ein Teller ist, welcher konfiguriert ist, um in Kontakt mit dem Sitz (46) von einer Seite einer Hochdruckleitung (12) der Hydraulikmaschine (20) zu kommen, aufweist, und
dem Diagnosesystem (101) gemäß einem der Ansprüche 1 bis 4.

6. Die Hydraulikmaschine (20) gemäß Anspruch 5,
wobei das Hochdruckventil (28) eine Kante bzw. einen Rand (48) aufweist, der zu dem Sitz (46) von dem Ventilkörper (35) vorsteht, und
wobei das Hochdruckventil (28) konfiguriert ist, um zu bewirken, dass die Hochdruckleitung (12) und die Arbeitskammer (24) in einem Nicht-Verbindungszustand sind, indem der Rand (48) des Ventilkörpers (35) in Kontakt mit dem Sitz (46) gelassen wird, in einem geschlossenen Zustand des Hochdruckventils (28).

7. Die Hydraulikmaschine (20) gemäß Anspruch 5 oder 6, die konfiguriert ist, um zu bewirken, dass der Zylinder (21) entsprechend dem Hochdruckventil (28) in einem inaktiven Zustand ist, bei dem keine Verdrängung erzeugt wird, wenn das Diagnosesystem (101) die Beschädigung des Ventilkörpers (35) des Hochdruckventils (28) erfasst.

8. Ein hydraulisches Getriebe, mit:
einer Hydraulikpumpe (8) zum Erzeugen von Drucköl,
einem Hydraulikmotor (10), der konfiguriert ist, um durch das Drucköl von der Hydraulikpumpe (8) angetrieben zu werden,
einer Hochdruckleitung (12), die einen Auslass der Hydraulikpumpe (8) und einen Einlass des Hydraulikmotors (10) verbindet, und
einer Niederdruckleitung (14), die einen Auslass des Hydraulikmotors (10) und einen Einlass der Hydraulikpumpe (8) verbindet,
wobei zumindest einer von der Hydraulikpumpe (8) oder dem Hydraulikmotor (10) die Hydraulikmaschine (20) gemäß Anspruch 5, 6 oder 7 ist.

9. Eine Stromerzeugungsvorrichtung (1) auf Basis erneuerbarer Energie, mit:
einem Rotor (3), der konfiguriert ist, um erneuerbare Energie zur Rotation zu empfangen,
einer Hydraulikpumpe (8), die konfiguriert ist, um durch den Rotor (3) zum Druckbeaufschlagen von Arbeitsöl angetrieben zu werden,
einem Hydraulikmotor (10), der konfiguriert ist, um durch das von der Hydraulikpumpe (8) mit Druck beaufschlagte Arbeitsöl angetrieben zu werden,
einer Hochdruckleitung (12), die einen Auslass der Hydraulikpumpe (8) und einen Einlass des Hydraulikmotors (10) verbindet,
einer Niederdruckleitung (14), die einen Auslass des Hydraulikmotors (10) und einen Einlass der Hydraulikpumpe (8) verbindet, und
einem Generator (16), der konfiguriert ist, um durch den Hydraulikmotor (10) angetrieben zu werden,
wobei zumindest einer von der Hydraulikpumpe (8) oder dem Hydraulikmotor (10) die Hydraulikmaschine (20) gemäß Anspruch 5, 6 oder 7 ist.

10. Ein Verfahren zum Diagnostizieren einer Hydraulikmaschine (20), die eine Rotorwelle (32), einen Zylinder (21), einen Kolben (22), welcher zusammen mit dem Zylinder (21) eine Arbeitskammer (24) bildet, ein Hochdruckventil (28) und ein Niederdruckventil (30), welche für die Arbeitskammer (24) vorgesehen sind, aufweist, wobei das Hochdruckventil (28) ein Sitz- oder Tellerventil ist, das einen Sitz (46) und einen Ventilkörper (35), welcher ein Teller ist, der ausgestaltet ist, um in Kontakt mit dem Sitz (46) von einer Seite einer Hochdruckleitung (12) der Hydraulikmaschine (20) zu sein, aufweist, und wobei die Hydraulikmaschine (20) konfiguriert ist, um eine Umwandlung zwischen einer Drehbewegung der Rotorwelle (32) und einer Hin-und-Herbewegung des Kolbens (22) auszuführen,
wobei das Verfahren aufweist:
einen Druckerfassungsschritt des Erfassens eines Drucks der Arbeitskammer (24), und
einen Beschädigungserfassungsschritt des Erfassens einer Beschädigung des Hochdruckventils (28) auf der Basis eines Ergebnisses einer Erfassung, die in dem Druckerfassungsschritt erhalten wurde,
wobei der Beschädigungserfassungsschritt ein Erfassen der Beschädigung des Ventilkörpers (35) des Hochdruckventils (28) auf der Basis eines Maximalwerts eines Drucks der Arbeitskammer (24) bei jedem Zyklus der Hin-und-Herbewegung des Kolbens (22) umfasst, und
wobei der Beschädigungserfassungsschritt ein Bestimmen umfasst, dass eine Beschädigung des Ventilkörpers (35) des Hochdruckventils (28) vorliegt, wenn Pmax_ave+a*σ zumindest ein Schwellenwert ist, wobei Pmax_ave ein Durchschnitt des Maximalwerts des Drucks der Arbeitskammer (24) in einer statistischen Periode ist, σ eine Standardabweichung des Maximalwerts des Drucks der Arbeitskammer (24) in der statistischen Periode ist, und a ein Wert ist, der einen Ausdruck von a≥0 erfüllt.

11. Das Verfahren zum Diagnostizieren einer Hydraulikmaschine (20) gemäß Anspruch 10,
wobei der Beschädigungserfassungsschritt ein Bewerten eines Ausmaßes einer Beschädigung des Ventilkörpers (35) des Hochdruckventils (28) auf der Basis eines Anstiegs von Pmax_ave+a*σ in einer statistischen Periode zu bewerten, wobei Pmax_ave ein Durchschnitt des Maximalwerts des Drucks der Arbeitskammer (24) in der statistischen Periode ist, σ eine Standardabweichung des Maximalwerts des Drucks der Arbeitskammer (24) in der statistischen Periode ist, und a ein Wert ist, der einen Ausdruck von a≥0 erfüllt, aufweist.

12. Das Verfahren zum Diagnostizieren einer Hydraulikmaschine (20) gemäß Anspruch 9 oder 10, ferner mit einem Schwellenwerteinstellschritt des Bestimmens eines Schwellenwerts auf der Basis eines statistischen Werts des Maximalwerts des Drucks der Arbeitskammer (24) in einem anfänglichen Zustand des Hochdruckventils (28),
wobei der Beschädigungserfassungsschritt ein Erfassen der Beschädigung des Ventilkörpers (35) des Hochdruckventils (28) auf der Basis eines Ergebnisses eines Vergleichs zwischen dem Maximalwert des Drucks der Arbeitskammer (24) oder dem statistischen Wert des Maximalwerts mit dem in dem Schwellenwerteinstellschritt eingestellten Schwellenwert aufweist.

13. Das Verfahren zum Diagnostizieren einer Hydraulikmaschine (20) gemäß einem der Ansprüche 10 bis 12,
ferner mit einem Zulassen, dass der Zylinder (21) entsprechend dem Hochdruckventil (28) in einem inaktiven Zustand ist, bei dem keine Verdrängung erzeugt wird, oder einem Ersetzen des Hochdruckventils (28), wenn eine Beschädigung des Ventilkörpers (35) des Hochdruckventils (28) in dem Beschädigungserfassungsschritt erfasst wird.

## Revendications

1. Système (101) de diagnostic pour une machine (20) hydraulique qui comporte un arbre (32) formant rotor, un cylindre (21), un piston (22) formant une chambre (24) de travail ensemble avec le cylindre (21), une vanne (28) à haute pression et une vanne (30) à basse pression prévues pour la chambre (24) de travail, dans lequel la vanne (28) à haute pression est une vanne en champignon qui inclut un siège (46) et un corps (35) de vanne qui est en forme de champignon configuré pour être en contact avec le siège (46) à partir d'un côté d'une ligne (12) à haute pression de la machine (20) hydraulique, et dans lequel la machine (20) hydraulique est configurée pour effectuer une conversion entre un déplacement en rotation de l'arbre (32) formant rotor et un mouvement de va-et-vient du piston (22), le système (101) de diagnostic comportant :
un capteur (72) de pression pour détecter une pression de la chambre (24) de travail ; et
une partie (102) de détection d'endommagement pour détecter l'endommagement de la vanne (28) à haute pression sur la base d'un résultat d'une détection obtenu par le capteur (72) de pression,
dans lequel la partie (102) de détection d'endommagement est configurée pour détecter l'endommagement du corps (35) de vanne de la vanne (28) à haute pression sur la base d'une valeur maximum d'une pression de la chambre (24) de travail dans chaque cycle du déplacement en va-et-vient du piston (22), et
dans lequel la partie (102) de détection d'endommagement est configurée pour déterminer qu'un endommagement du corps (35) de vanne de la vanne (28) à haute pression existe si Pmax_ave+a×σ est au moins un seuil, où Pmax_ave est une moyenne de la valeur maximum de la pression de la chambre (24) de travail dans une durée statistique, σ est un écart standard de la valeur maximum de la pression de la chambre (24) de travail dans la durée statistique, et a est une valeur qui satisfait une condition a ≥ 0.

2. Système (102) de diagnostic pour une machine (20) hydraulique suivant la revendication 1,
dans lequel la partie (102) de détection d'endommagement est configurée pour évaluer un degré d'endommagement du corps (35) de vanne de la vanne (28) à haute pression sur la base d'un taux croissant de Pmax_ave+a×σ dans une durée statistique, où Pmax_ave est une moyenne de la valeur maximum de la pression de la chambre (24) de travail dans la durée statistique, σ est un écart standard de la valeur maximum de la pression de la chambre (24) de travail dans la durée statistique, et a est une valeur qui satisfait une condition a ≥ 0.

3. Système (102) de diagnostic pour une machine (20) hydraulique suivant la revendication 1 ou 2,
dans lequel la partie (102) de détection d'endommagement est configurée pour détecter l'endommagement du corps (35) de vanne de la vanne (28) à haute pression sur la base du nombre de fois que la valeur maximum de la pression de la chambre (24) de travail a dépassé un seuil.

4. Système (102) de diagnostic pour une machine (20) hydraulique suivant l'une quelconque des revendications 1 à 3, comportant en outre une partie (104) de réglage de seuil configurée pour déterminer un seuil sur la base d'une valeur statistique de la valeur maximum de la pression de la chambre (24) de travail dans un état initial de la vanne (28) à haute pression,
dans lequel la partie (102) de détection d'endommagement est configurée pour détecter l'endommagement du corps (35) de vanne de la vanne (28) à haute pression sur la base d'un résultat d'une comparaison entre la valeur maximum de la pression de la chambre (24) de travail ou de la valeur statistique de la valeur maximum et du seuil réglé par la partie (104) de réglage de seuil.

5. Machine (20) hydraulique, comportant en outre :
un arbre (32) formant rotor ;
un cylindre (21) ;
un piston (22) formant une chambre (24) de travail ensemble avec le cylindre (21) ;
une vanne (28) à haute pression et une vanne (30) à basse pression prévues pour la chambre (24) de travail, dans laquelle la vanne (28) à haute pression est une vanne en champignon qui inclut un siège (46) et un corps (35) de vanne qui est en forme de champignon configuré pour être en contact avec le siège (46) d'un côté d'une ligne (12) à haute pression de la machine (20) hydraulique ; et
le système (101) de diagnostic suivant l'une quelconque des revendications 1 à 4.

6. Machine (20) hydraulique suivant la revendication 5,
dans laquelle la vanne (28) à haute pression comporte une nervure (48) faisant saillie en direction du siège (46) à partir du corps (35) de vanne, et
dans laquelle la vanne (28) à haute pression est configurée pour faire en sorte que la ligne (12) à haute pression et la chambre (24) de travail soient dans un état de non-communication par l'intermédiaire de la nervure (48) du corps (35) de vanne qui est laissé pouvoir être en contact avec le siège (46), dans un état fermé de la vanne (28) à haute pression.

7. Machine (20) hydraulique suivant la revendication 5 ou 6 configurée pour faire en sorte que le cylindre (21) correspondant à la vanne (28) à haute pression soit dans un état inactif ne produisant pas de déplacement, si le système (101) de diagnostic détecte l'endommagement du corps (35) de vanne de la vanne (28) à haute pression.

8. Transmission hydraulique, comportant :
une pompe (8) hydraulique pour produire de l'huile sous pression ;
un moteur (10) hydraulique configuré pour être entraîné par l'huile sous pression provenant de la pompe (8) hydraulique ;
une ligne (12) à haute pression connectant une sortie de la pompe (8) hydraulique et une entrée du moteur (10) hydraulique ; et
une ligne (14) basse pression reliant une sortie du moteur (10) hydraulique et une entrée de la pompe (8) hydraulique,
dans laquelle au moins l'un de la pompe (8) hydraulique ou du moteur (10) hydraulique est la machine (20) hydraulique suivant l'une des revendications 5, 6 ou 7.

9. Dispositif (1) de production de puissance du type à énergie renouvelable, comportant :
un rotor (3) configuré pour recevoir de l'énergie renouvelable pour tourner ;
une pompe (8) hydraulique configurée pour être entraînée par le rotor (3) pour mettre sous pression de l'huile de travail ;
un moteur (10) hydraulique configuré pour être entraîné par l'huile de travail pressurisée par la pompe (8) hydraulique ;
une ligne (12) à haute pression reliant une sortie de la pompe (8) hydraulique et une entrée du moteur (10) hydraulique ;
une ligne (14) basse pression reliant une sortie du moteur (10) hydraulique et une entrée de la pompe (8) hydraulique ; et
un générateur (16) configuré pour être entraîné par le moteur (10) hydraulique,
dans lequel au moins l'un de la pompe (8) hydraulique ou du moteur (10) hydraulique est la machine hydraulique (20) suivant l'une des revendications 5, 6 ou 7.

10. Procédé de diagnostic d'une machine (20) hydraulique, qui comporte un arbre (32) de rotor, un cylindre (21), un piston (22) formant une chambre (24) de travail ensemble avec le cylindre (21), une vanne (28) à haute pression et une vanne (30) à basse pression prévues pour la chambre (24) de travail, dans lequel la vanne (28) à haute pression est une vanne en champignon qui inclut un siège (46) et un corps (35) de vanne qui est en forme de champignon configuré pour être en contact avec le siège (46) d'un côté d'une ligne (12) à haute pression de la machine (20) hydraulique, et dans lequel la machine (20) hydraulique est configurée pour effectuer une conversion entre un déplacement en rotation de l'arbre (32) formant rotor et un mouvement de va-et-vient du piston (22), le procédé comportant :
une étape de détection de pression pour détecter une pression de la chambre (24) de travail ; et
une étape de détection d'endommagement pour détecter un endommagement de la vanne (28) à haute pression, sur la base d'un résultat de détection obtenu dans l'étape de détection de pression,
dans lequel l'étape de détection d'endommagement comporte la détection de l'endommagement du corps (35) de vanne de la vanne (28) à haute pression sur la base d'une valeur maximum d'une pression de la chambre (24) de travail dans chaque cycle de déplacement en va-et-vient du piston (22), et
dans lequel l'étape de détection d'endommagement comporte la détermination qu'un endommagement du corps (35) de vanne de la vanne (28) à haute pression existe si Pmax_ave+a×σ est au moins un seuil, où Pmax_ave est une moyenne de la valeur maximum de la pression de la chambre (24) de travail dans une durée statistique, σ est un écart standard de la valeur maximum de la pression de la chambre (24) de travail dans la durée statistique, et a est une valeur qui satisfait une condition a ≥ 0.

11. Procédé de diagnostic d'une machine (20) hydraulique suivant la revendication 10,
dans lequel l'étape de détection d'endommagement comporte l'évaluation d'un degré d'endommagement du corps (35) de vanne de la vanne (28) à haute pression sur la base d'un taux d'accroissement de Pmax_ave+a×σ dans une durée statistique, où Pmax-ave est une moyenne de la valeur maximum de la pression de la chambre (24) de travail dans la durée statistique, σ est un écart standard de la valeur maximum de la pression de la chambre (24) de travail dans la durée statistique, et a est une valeur qui satisfait une condition a ≥ 0.

12. Procédé de diagnostic d'une machine (20) hydraulique suivant la revendication 10 ou 11, comportant en outre une étape de réglage de seuil de détermination d'un seuil sur la base d'une valeur statistique de la valeur maximum de la pression de la chambre (24) de travail dans un état initial de la vanne (28) à haute pression,
dans laque l'étape de détection d'endommagement comporte la détection d'endommagement du corps (35) de vanne de la vanne (28) à haute pression sur la base d'un résultat d'une comparaison entre la valeur maximum de la pression de la chambre (24) de travail ou la valeur statistique de la valeur maximum et le seuil réglé dans l'étape de réglage de seuil.

13. Procédé de diagnostic d'une machine (20) hydraulique suivant l'une quelconque des revendications 10 à 12,
comportant en outre le fait de permettre au cylindre (21) correspondant à la vanne (28) à haute pression d'être dans un état inactif de ne pas produire un déplacement, ou de remplacer la vanne (28) à haute pression, si un endommagement du corps (35) de vanne de la vanne (28) à haute pression est détecté lors de l'étape de détection d'endommagement.
